# EUROPÄISCHE PATENTANMELDUNG

(11) **EP 1 201 849 A2**
(43) Veröffentlichungstag der Anmeldung: **02.05.2002**
(21) Anmeldenummer: 01125104.8
(22) Anmeldetag: 23.10.2001
(51) Int. Cl.: E04H 6/42

(54) **Verfahren und Vorrichtung zur Parkraumzuordnung**

(30) Priorität: 26.10.2000 DE 10053249
(71) Anmelder: Daimler-Benz Aktiengesellschaft, 70567 Stuttgart (DE)
(72) Erfinder: Hinz, Ralf, 89075 Ulm (DE)

(57) **Zusammenfassung**

Die Erfindung betrifft eine Vorrichtung und ein Verfahren zur Parkraumzuordnung, bei dem über ein Funkgerät in einem Fahrzeug eine Anfrage nach einer Parkmöglichkeit an eine Vorrichtung zur Parkraumzuordnung gestellt wird. Diese Anfrage enthält die Information über die aktuelle Position des Fahrzeuges. Mit diesen Informationen ermittelt die Vorrichtung eine geeignete, insbesondere die nächste freie Parkmöglichkeit. Die zugehörigen Zielinformationen zu der freien Parkmöglichkeit werden an das Fahrzeug mittels einer Funkverbindung übertragen. Danach wird die erwartete Ankunftszeit in der Vorrichtung berechnet und zu einer vorgegebenen Vorlaufzeit vor der erwarteten Ankunftszeit überprüft, ob die ermittelte Parkmöglichkeit immer noch zur Verfügung steht. Ist die Parkmöglichkeit frei, so besteht die Möglichkeit, diese für das Fahrzeug zu reservieren. Ist sie nicht mehr frei, so ermittelt die Vorrichtung eine neue Parkmöglichkeit und überträgt an das Fahrzeug die neuen, geänderten Informationen, insbesondere Zielinformationen zu dieser neuen Parkmöglichkeit. Vorzugsweise wird diese neue ermittelte Parkmöglichkeit für das Fahrzeug reserviert.

Durch dieses erfindungsgemäße Verfahren und Vorrichtung zur Parkraumzuordnung gelingt es, eine sichere Zuordnung von Parkmöglichkeiten zu schaffen, ohne daß umfangreiche Reservierungen von Parkmöglichkeiten notwendig sind. Mithin schafft die vorliegende Erfindung eine komfortable Möglichkeit, sicher und kostengünstig einen Parkplatz zu erreichen.

## Beschreibung

Es sind verschiedenen Verfahren zur Parkraumzuordnung bekannt. Bei einem der bekannten Verfahren wird mittels Verkehrszeichen im Bereich der Zufahrtsstraßen ein Hinweis auf mögliche freie Parkräume in Parkhäusern oder auf Parkplätzen gegeben. Der Kraftfahrzeugführer, der eine Parkmöglichkeit sucht, kann sich nach diesen Hinweisen richten und die angezeigten Parkmöglichkeiten aufsuchen. Regelmäßig entsteht aber die Situation, daß bis zum Eintreffen an der angezeigten Parkmöglichkeit diese belegt ist, was zur Unzufriedenheit bei dem Parkraumsuchenden führt.

Weiterhin sind Verfahren bekannt, bei denen mittels einer Nachfrage über Mobilfunk zusammen mit Fahrzeugdaten an eine Parkplatzzentrale geschickt werden. Die Zentrale wählt die am besten geeignete Parkmöglichkeit aus und sendet dessen Adresse über Mobilfunk an den Computer im Fahrzeug zurück, der mit einem Zielführungssystem in Verbindung steht und dieses dahingehend programmiert, daß das Zielführungssystem den Fahrer zu seiner Parkmöglichkeit führt. Dieses Verfahren zeigt eine bessere Handhabung für den Fahrer, kann aber die prinzipiellen Nachteile des vorgenannten, bekannten Verfahrens nicht überwinden.

Der Erfindung liegt die Aufgabe zugrunde, ein Verfahren und eine Vorrichtung zur Parkraumzuordnung zu schaffen, das eine möglichst sichere Zuordnung freien Parkraums zu einem bestimmten Fahrer ermöglicht.

Diese Aufgabe wird durch das erfindungsgemäße Verfahren zur Parkraumzuordnung mit den Merkmalen des Anspruchs 1 und die Vorrichtung zur Parkraumzuordnung mit den Merkmalen des Anspruchs 5 gelöst.

Vorteilhafte Weiterbildungen der Erfindung sind Gegenstand der Unteransprüche.

Erfindungsgemäß wird mittels eines Funkgerätes in einem Fahrzeug eine Anfrage nach einer Parkmöglichkeit an eine Parkleitzentrale gestellt. Diese Anfrage enthält Informationen über die aktuelle Position des Fahrzeuges und gegebenenfalls über den gewünschten Parkraumbereich, so daß die Parkleitzentrale eine geeignete Parkmöglichkeit, die vorzugsweise in nächster Nähe liegt, ermitteln kann und diese Information als Zielinformation an das Fahrzeug übermitteln kann. Auf der Basis der aktuellen Position und der Zielinformation wird dann entweder im Fahrzeug oder in der Parkleitzentrale, auch Vorrichtung zur Parkraumzuordnung genannt, die erwartete Ankunftszeit bestimmt. Wird die erwartete Ankunftszeit im Fahrzeug bestimmt, so wird diese an die Parkleitzentrale übermittelt. Ausgehend von dieser erwarteten Ankunftszeit wird ein Zeitpunkt bestimmt, der eine vorgegebene Zeit (Vorlaufzeit) vor der erwarteten Ankunftszeit liegt. Zu diesem Zeitpunkt wird die Parkleitzentrale automatisch erneut das Vorhandensein der freien Parkmöglichkeit an dem Ziel überprüfen und bei Vorhandensein einer freien Parkmöglichkeit diese für das Fahrzeug reservieren. Andernfalls wird die Parkleitzentrale eine neue Parkmöglichkeit suchen und die Informationen zu dieser Parkmöglichkeit an das Fahrzeug übermitteln. Dieses wird diese neuen Zielinformationen aufnehmen. Dadurch wird ein Anfahren des besetzten nicht zur Verfügung stehenden Parkraumes vermieden. Dadurch gelingt es, die Zufriedenheit des Fahrzeugführers bei der Suche von freien Parkplätzen zu erhalten und dadurch die Akzeptanz für den Verkehr zu bewahren. Weiterhin wird eine unnötige Belastung der Umwelt durch unnötige Abgase und unnötigen Spritverbrauch verhindert.

Es hat sich besonders bewährt, im Fall einer Notwendigkeit einer Ausweich-Parkmöglichkeit diese sofort zu reservieren oder im Falle einer beachtlichen Entfernung zu der Ausweich-Parkmöglichkeit eine erneute Überprüfung rechtzeitig vor dem Erreichen dieser neuen Parkmöglichkeit vorzunehmen und ggf. zu diesem Zeitpunkt die Reservierung der freien Parkmöglichkeit bzw. erneut eine neue Parkmöglichkeit zu suchen und diese an den Funkempfänger im Fahrzeug zu übertragen. Hierdurch ist eine noch bessere und sicherere Zuordnung eines freien Parkplatzes zu einem bestimmten Fahrzeug gegeben. Weiterhin gelingt es die Kosten für die Benutzung des Parkplatzes, die sich aus der Parkzeit und der Reservierungszeit bestimmen, möglichst gering zu halten.

Es hat sich besonders bewährt, die vorgegebene Vorlaufzeit und damit den Zeitpunkt, an dem das Vorhandensein einer Parkmöglichkeit an dem erwarteten Ziel überprüft wird, einstellbar zu wählen. Je nach Verkehrssituation und nach Verkehrsmöglichkeiten in dem Zielbereich oder in der Stadt, in der Parkmöglichkeiten gesucht werden, wird ein kurzer oder längerer zeitlicher Vorlauf gewählt. Eine kurze Vorlaufzeit erscheint insbesondere dann geeignet, wenn eine hohe Dichte an Parkmöglichkeiten respektive Parkhäuser mit großer Anzahl an freien Parkplätzen zur Verfügung steht, während eine lange Vorlaufzeit, insbesondere wenn große Abstände zwischen den Parkhäusern oder den Parkplätzen bei einer hohen Nachfrage an Parkmöglichkeiten und geringem Angebot an freien Parkmöglichkeiten besteht, gewählt wird. Vorzugsweise wird der Umfang des zeitlichen Vorlaufs durch den Benutzer einstellbar gewählt, so daß der Benutzer entsprechend seiner eigenen Bewertung das Risiko einer neuen Suche nach einer neuen freien Parkmöglichkeit in Abhängigkeit von den höheren Parkplatzkosten aufgrund einer längeren Reservierungszeit abwägend wählen kann.

Darüber hinaus hat es sich als vorteilhaft erwiesen, daß neben den an das Fahrzeug übermittelten Zielinformationen zur ermittelten Parkmöglichkeit weitere Informationen zur Parkmöglichkeit übermittelt werden. Diese zusätzlichen Informationen können Informationen zu den Öffnungszeiten des Parkhauses, respektive des Parkplatzes mit den Parkmöglichkeiten, Parkgebühren, die Anzahl der weiteren freien Parkmöglichkeiten, Informationen zu Veranstaltungen im Umfeld der Parkmöglichkeit usw. sein. Durch diese zusätzlichen Informationen wird die Akzeptanz durch den Benutzer des Fahrzeuges merklich erhöht.

Es hat sich besonders bewährt, die an das Fahrzeug übermittelten Zielinformationen zur ermittelten Parkmöglichkeit an ein Navigationsgerät im Fahrzeug zu übertragen und dieses so zu steuern, daß es die Zielinformationen der Parkmöglichkeiten automatisch als Ziel ggf. als neues Ziel auffaßt und die Fahrroute zu der Parkmöglichkeit von der aktuellen Position des Fahrzeugs aus ermittelt und dem Benutzer entsprechende Fahrthinweise gibt. Durch diese Vorgehensweise wird ein Sich-Merken-Müssen des Zieles durch den Benutzer überflüssig, was mit einer fehlerhaften Eingabe des Zieles und den damit verbundenen Ärger verhindert.

Die erfindungsgemäße Vorrichtung zur Parkraumzuordnung zeigt ein Funkgerät, das über eine Funkstrecke empfangene Anfragen von Fahrzeugen nach Parkplatzmöglichkeiten empfängt und Informationen über Parkmöglichkeiten an die Fahrzeuge mit eingebauten entsprechenden Funkgeräten übermittelt. Im Rahmen der Anfragen werden insbesondere Informationen zur aktuellen Position des Fahrzeuges übermittelt. Im Rahmen der an die Fahrzeuge übermittelten Informationen über die Parkmöglichkeiten werden insbesondere die Zielinformationen der ermittelten Parkmöglichkeiten aber auch ggf. ergänzend Informationen über die Parkmöglichkeiten, z.B. Öffnungszeiten, Parkgebühren und ähnliches übermittelt. Ausgehend von der empfangenen Anfrage nach Parkplatzmöglichkeiten und ausgehend von der übermittelten aktuellen Position des Fahrzeuges ermittelt die Vorrichtung zur Parkraumzuordnung eine geeignete, insbesondere die nächst gelegene freie Parkmöglichkeit. Weiterhin ermittelt sie vorzugsweise die zu erwartende Ankunftszeit des Fahrzeuges an der ermittelten Parkmöglichkeit. Alternativ hierzu kann diese erwartete Ankunftszeit auch durch einen Rechner, insbesondere einen Navigationsrechner, in dem Fahrzeug ermittelt und an die Vorrichtung über Funkstrecke übertragen werden. Die erfindungsgemäße Vorrichtung ist so gesteuert, daß sie einen vorgegebenen Zeitraum (Vorlaufzeit) vor der erwarteten Ankunftszeit erneut überprüft, ob die übertragene und dem Fahrzeug angegebene Parkmöglichkeit immer noch frei ist oder nicht. Ist diese frei, so wird diese Parkmöglichkeit bei einer bevorzugten Ausbildung der Vorrichtung für das entsprechende Fahrzeug reserviert. Ist diese Parkmöglichkeit nicht mehr frei, so wird eine neue geeignete Parkmöglichkeit berechnet und von der Vorrichtung an das Fahrzeug übermittelt, so daß das Fahrzeug die neue Parkmöglichkeit zielgerichtet anfahren kann. Vorzugsweise wird diese neu ermittelte Parkmöglichkeit sofort reserviert oder entsprechend der Überprüfung des ersten übermittelten Parkraumzieles erneut zu einer vorgegebenen Zeitpunkt vor der erwarteten Ankunftszeit an dem neuen Parkraumziel überprüft und ggf. reserviert bzw. erneut ein neues Ziel in entsprechender Weise ermittelt. Mit Hilfe dieser Vorrichtung zur Parkraumzuordnung gelingt es, den Fahrzeugführern, insbesondere in Stadtbereichen mit sehr begrenzten Parkmöglichkeiten, auf einfache, zuverlässige und kostengünstige Weise eine Parkmöglichkeit zuzuordnen. Durch diese vorteilhafte Parkraumzuordnung wird das Suchen und das Erreichen von freien Parkräumen erheblich vereinfacht und sicherer gestaltet, so daß der Komfort beim Fahren für den Benutzer erheblich gesteigert ist.

Die Parkhäuser oder Parkplätze, derer Parkräume durch die Erfindung einzelnen Fahrzeugen zugeordnet werden, zeigen die Möglichkeit, daß Fahrzeuge mit reserviertem Parkplatz bevorzugt zum Beispiel durch einen separaten Zugang oder Zufahrt zu dem reservierten Parkraum erhalten und dadurch ein Warten vermieden werden kann. Vorzugsweise zeigen sie auch Mittel zum Identifizieren der Fahrzeuge, so daß ein automatisch geführtes Zuführen der Fahrzeuge zu ihren reservierten Parkräumen ermöglicht ist.

## Patentansprüche

1. Verfahren zur Parkraumzuordnung, wobei über ein Funkgerät in einem Fahrzeug eine Anfrage nach einer Parkmöglichkeit an eine Vorrichtung zur Parkraumzuordnung gestellt wird,
die Vorrichtung zur Parkraumzuordnung eine geeignete Parkmöglichkeit ermittelt, die dieser Parkmöglichkeit zugeordneten Zielinformationen an das Funkgerät in dem Fahrzeug übermittelt,
**dadurch gekennzeichnet,**
**daß** die Anfrage Informationen über die aktuelle Position des Fahrzeuges enthält,
**daß** eine erwartete Ankunftszeit berechnet wird,
**daß** automatisch eine vorgegebene Vorlaufzeit vor der erwarteten Ankunftszeit, das Vorhandensein der Parkmöglichkeit überprüft wird und bei Nicht-Vorhandensein der Parkmöglichkeit eine andere Parkmöglichkeit bestimmt und die dieser neuen Parkmöglichkeit zugeordneten Zielinformationen an das Funkgerät in dem Fahrzeug übermittelt wird während bei Vorhandensein der Parkmöglichkeit keine neue Parkmöglichkeit bestimmt und an das Funkgerät in dem Fahrzeug übermittelt wird.

2. Verfahren zur Parkraumzuordnung nach Anspruch 1, **dadurch gekennzeichnet, daß** bei Vorhandensein der Parkmöglichkeit bei der Überprüfung oder nach Ermittlung einer anderen Parkmöglichkeit diese vorhandene Parkmöglichkeit für das Fahrzeug reserviert wird.

3. Verfahren zur Parkraumzuordnung nach Anspruch 1 oder 2, **dadurch gekennzeichnet, daß** die vorgegebene Vorlaufzeit vor der erwarteten Ankunftszeit insbesondere durch den Benutzer einstellbar ist.

4. Verfahren zur Parkraumzuordnung nach einen der vorstehenden Ansprüche, **dadurch gekennzeichnet, daß** die an das Fahrzeug übermittelten Zielinformationen der Parkmöglichkeit an ein Navigationsgerät weitergeleitet werden, das automatisch diese Parkmöglichkeit als Ziel auffaßt.

5. Verfahren zur Parkraumzuordnung nach einen der vorstehenden Ansprüche, **dadurch gekennzeichnet, daß** zu der an das Fahrzeug übermittelten Zielinformation zu der Parkmöglichkeit weitere Informationen zur Parkmöglichkeit übermitteltet werden.

6. Vorrichtung zur Parkraumzuordnung zur Durchführung eines Verfahren gemäß einem der vorstehenden Ansprüche, **dadurch gekennzeichnet, daß** sie ein Funkgerät aufweist, mit welchem eine Funkverbindung mit Fahrzeugen zur Übermittlung von Anfragen nach Parkplatzmöglichkeiten insbesondere Zielmöglichkeiten ermöglicht werden,
daß sie eine Steuerung aufweist, die eine vorgegebene Vorlaufzeit vor einer erwarteten Ankunftszeit an der übermittelten Parkmöglichkeit eine Überprüfung auf Vorhandensein der Parkmöglichkeit dahingehend auslöst,
daß bei Feststellung des Nicht-Vorhandenseins der Parkmöglichkeit eine andere Parkmöglichkeit automatisch bestimmt wird und die dieser neuen Parkmöglichkeit zugeordneten Informationen an das Funkgerät in dem Fahrzeug übermittelt werden und insbesondere diese Parkmöglichkeit für das Fahrzeug reserviert wird während
daß bei Feststellung des Vorhandenseins der Parkmöglichkeit insbesondere diese für das Fahrzeug reserviert wird.
